# EUROPEAN PATENT SPECIFICATION

(11) **EP 0 352 040 B1**
(45) Date of publication and mention of the grant of the patent: **20.04.1994**
(21) Application number: 89307191.0
(22) Date of filing: 14.07.1989
(51) Int. Cl.: H04M 3/30

(54) **Apparatus for the automatic in-circuit testing of subscriber line interface circuits and method therefor**
Gerät zur automatischen schaltungsinternen Prüfung von Teilnehmerschaltungen und Verfahren
Appareil d'essai automatique en circuit de circuits d'interface de ligne d'abonné et méthode

(30) Priority: 19.07.1988 US 221062
(43) Date of publication of application: 24.01.1990
(73) Proprietor: Hewlett-Packard Company, Palo Alto, California 94304 (US)
(72) Inventor: Chism, Wayne R., Greeley, CO 80634 (US)
(74) Representative: Powell, Stephen David

(56) References cited:
- DE-A- 3 215 680
- DE-A- 3 500 848
- ELECTRONICS LETTERS, vol. 22, no. 18, 28th August 1986, pages 933-934, Stevenage, Herts, GB; L. WOZICH et al.: "New method for connection of test bus to a line interface circuit"
- INTERNATIONAL TEST CONFERENCE, Philadelphia, 18th - 20th October 1983, paper 25.2, pages 750-766, IEEE, New York, US; J. HOFER et al.: "Digital signal processing test techniques for telecommunications integrated circuits"

## Description

This application is related to the following filed applications by the same inventor:
1. Programmatically Generated In-Circuit Test for General Purpose Operational Amplifiers, S.N. 175,831, Filed March 31, 1988, now US-A-4,797,627, published on 10.01.89.
2. Programmatically Generated In-Circuit Test Of Analog to Digital Converters, S.N. 175,874, Filed March 31, 1988; now EP-A-0 342 784, published on 23.11.89, and
3. Programmatically Generated In-Circuit Test of Digital to Analog Converters, S.N. 175,713, Filed March 31, 1988 now US-A-4 888 548, published on 19.12.89.
4. Apparatus for the Automatic In-Circuit Testing of Coder/Decoder Telecommunications Circuits and Method Therefor; inventor: Wayne R. Chism; filed July 19, 1988.

This invention relates to the in-circuit functionality testing of hybrid circuit components, i.e., circuits having both analog and digital components and input/output ports; and, in particular, to an apparatus and method for the automatic in-circuit testing of subscriber line interface circuits.

A subscriber line interface circuit (SLIC) finds application in the telecommunications industry for interfacing analog instruments such as telephones, FSK Modems, fax machines and the like to telephone digital switching and transmission network equipment. SLIC perform multiple functions. For example, the SLIC is responsible for the direct interface between the telephone line and the low level signal processing components on a telecommunications line card. Both voice (audio in a range of 300 Hz to 3 KHz) and signalling information are processed by the SLIC. The SLIC performs the conventional BORSCHT functions-i.e., Battery feed (power to the telephone), Over-voltage protection, Ringing, Supervision (on or off hook status), Coding, Hybrid (2 to 4 wire conversion), and Test, see e.g. DE-A-3 215 680.

With the deregulation of the phone industry, numerous SLIC circuit designs are available from a variety of manufacturers. SLICS are being manufactured in large volumes to accommodate customer requirements. All of these circuits vary in design and degree in the composition of the hybrid circuits found in the SLIC design. All SLICs, however, irregardless of the manufacturer, must perform according to strict telecommunication standards as defined at the input/output parts. The proliferation of these "hybrid" components, i.e., integrated circuits incorporating both analog and digital functions in their design, has rendered standard fault detection techniques obsolete, and has created manufacturing and quality control problems for printed circuit board assemblies utilizing these devices and circuits.

A SLIC circuit generally comprises a component of an overall telecommunications card. While the card may be functionally tested at the inputs and outputs of the card, an "in-circuit test" may be desirable as a means by which to identify specific SLIC problems independently of other circuitry on the card. The in-circuit test is thus a manufacturing diagnostic tool aimed at reducing the overall manufacturing cost of the card.

Under the teachings of the present invention, in-circuit tests or measurements refer to printed circuit board test procedures which, through the use of various isolation techniques, perform "pin checks" and "gross functionality tests" on an individual circuit regardless of the specific circuit configuration or the effects of the surrounding components. "Pin checks" are tests specifically designed to verify appropriate electrical activity on all device pins (i.e., the physical connections on the card to the specific SLIC circuit). "Gross functionality tests" are more comprehensive than pin checks and refer to tests designed to verify the basic function of the SLIC in addition to simply verifying pin activity. It is to be expressly understood that neither the pin check test or the gross functionality test provides for a full functionality test of the SLIC circuit specification.

It is a problem in the field of in-circuit functionality testing of hybrid SLIC circuits to automatically test the circuit when resident on a card and interconnected with associated components. In practice, neither conventional analog or digital discrete in-circuit test techniques, alone, will suffice as a means of performing a comprehensive in-circuit test of analog and digital hybrid SLICs. Hence, printed circuit board assemblies incorporating SLICs have been difficult to test. As a result, telecommunication cards may incorporate defective SLIC circuits which are detected only much later in the manufacturing process. To detect and correct such defective SLICs at this time is considerably more expensive and inconvenient.

Therefore, a need exists to provide a fully automated and high speed test apparatus capable of conducting pin checks and gross functionality tests on "in-circuit" SLICS.

The above described problem is solved and a technical advance achieved in the field by the programmatically generated in-circuit test apparatus and method of the present invention for subscriber line interface circuits. The present invention is an automated apparatus and method for in-circuit testing of the subscriber line interface circuit mounted on a telecommunication card. The subscriber line interface circuit is interconnected with other associated components on the card. The subscriber line interface circuit conventionally has tip and ring pins, transmit and receive pins, and ring control, hook status, and ring trip pins.

The automated apparatus of the present invention connects to the tip, ring, and transmit pins, during a first test, for applying at least one analog AC voltage signal across the tip and ring pins and then recording the resulting transmit signal present on the transmit pin.

The apparatus then connects to the tip, ring, and receive pins for applying, during a second test, at least one analog AC voltage signal to the receive pin and then recording the resulting receive signals on the tip and ring pins. In order to apply the at least one analog AC voltage signal, the apparatus of the present invention must electrically overdrive any analog signal present on the receive pin when the telecommunication card is powered up.

The apparatus of the present invention then connects to the hook status, tip and ring pin for applying, during a third test, offhook and onhook signals to the tip and ring pins and receiving the resulting hook status signals on the hook status pin.

Finally, the apparatus of the present invention connects to the ring control, ring trip and the tip and ring pins for applying, during a fourth test, a ring command to the ring control pin. The apparatus of the present invention then records resulting ringing signal across the tip and ring pins and then applies an offhook signal to the tip and ring pins and receives the resulting ring trip signal on the ring trip pin.

The apparatus of the present invention for each of these tests receives the transmit, receive, hook status, ringing and ring trip signals and compares each signal to an expected signal. In the event that any received signal falls outside a predetermined range of the expected signal, a fail signal, for the SLIC, under test, is issued. Otherwise the SLIC passes and the apparatus of the present invention releases all relays and becomes ready for the next testing procedure.

A preferred embodiment of the present invention will now be described, by way of example only, with reference to the accompanying drawings, of which:
Figure 1 is a block circuit diagram of a subscriber line interface circuit located on a conventional telecommunications card;
Figures 2a and 2b are schematic circuit diagrams of the in-circuit tester of the present invention selectively interconnected to the subscriber line interface circuit being tested;
Figure 3 is a generalized flow diagram setting forth the automated test modules of the present invention;
Figure 4 sets forth the flow diagram for the module testing the transmit channel on a subscriber line interface circuit, under test;
Figure 5 is a flow diagram for the module testing the receive channel on a subscriber line interface channel, under test;
Figure 6 is a flow diagram for the module testing the hook status function of a subscriber line interface circuit, under test; and
Figure 7 is the flow diagram for the module testing the ringer function of a subscriber line interface circuit, under test.

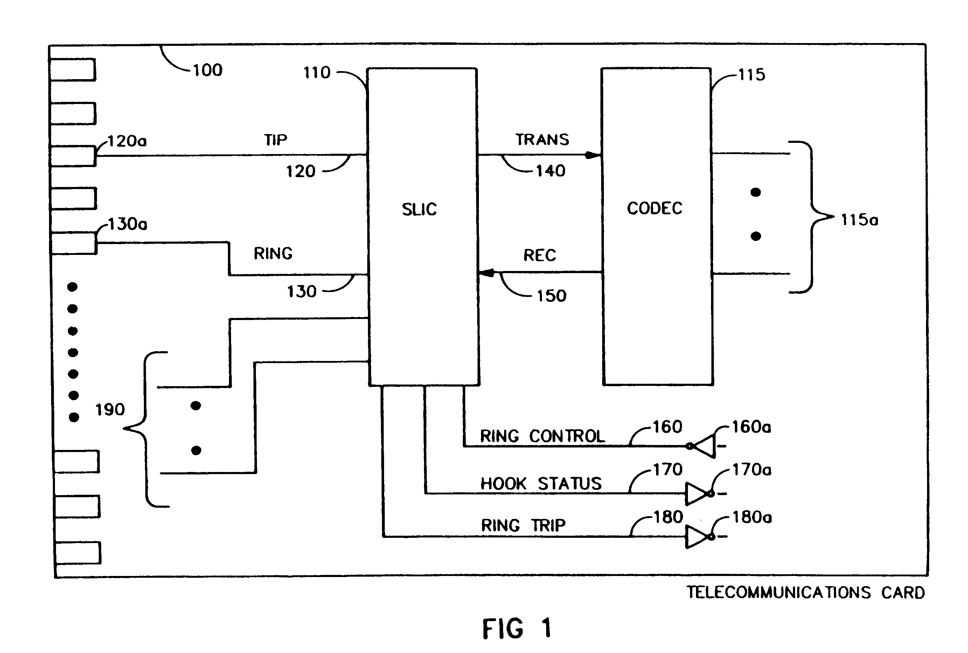

A typical telecommunications card 100 is shown in Figure 1 which carries a SLIC 110 and other telephony components such as a CODEC 115. A CODEC is an acronym for COder-DECoder and refers to a class of integrated circuits used in the telecommunications industry. It is to be expressly understood that a conventional telecommunications card 100 may have a variety of other hybrid components located on the printed circuit board.

The SLIC 110 conventionally receives a tip 120 and ring 130 signal from a line or pin connection which is interconnected to the card such as inputs 120a and 130a to the card 100. The tip 120 and ring 130 are conventionally interconnected to a telecommunication device such as a telephone instrument, not shown. The SLIC 110 delivers an analog transmit signal to the CODEC 120 over line or pin 140. The CODEC 120 delivers an analog receive signal over line 150 to the SLIC 110. The CODEC is interconnected over lines 115a to other components on the telecommunications card 100 through, typically, a PCM backplane. The SLIC 110 also receives a ring control signal over line 160 from an associated component 160a also located on card 100. The SLIC, in turn, delivers a hook status signal on line 170 to an associated component 170a and a ring trip signal on line 180 to an associated component 180a. Finally, the SLIC receives power and ground over lines 190.

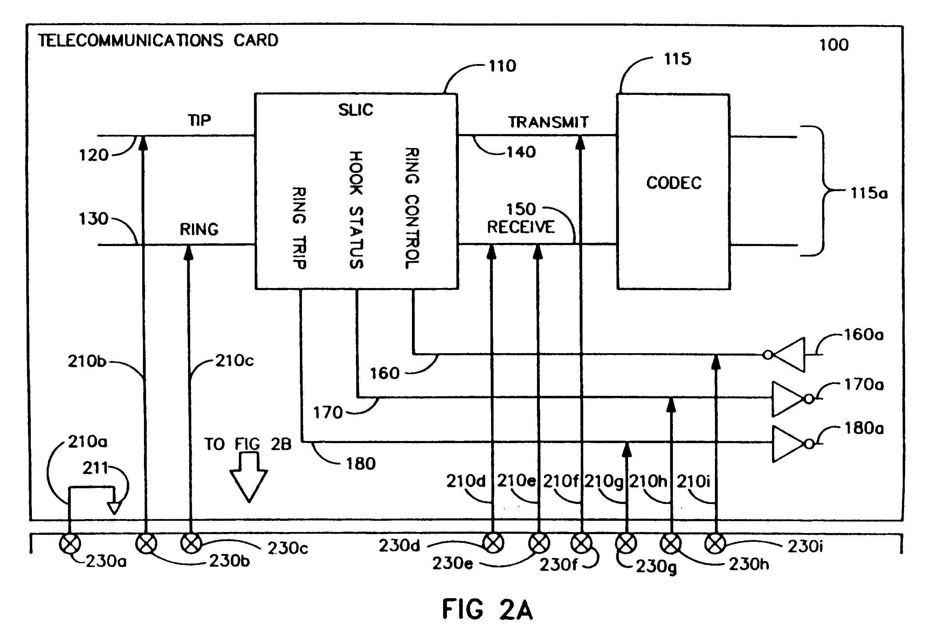

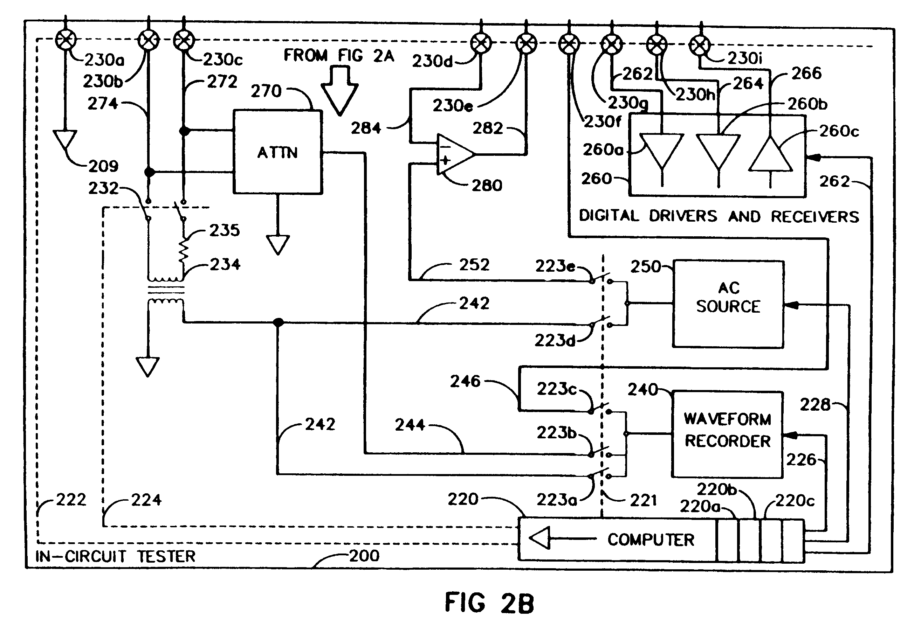

In Figures 2a and 2b, the configuration for the in-circuit testing of the SLIC 110, under the teachings of the present invention, is set forth. The telecommunications card 100 is placed on a fixture, not shown, wherein the in-circuit tester 200 of the present invention accesses the SLIC 110 input and output by means of mechanical test probes 210 that engages the actual pins. As shown in Figure 2b, the in-circuit tester 200 utilizes a computer 220 as an overall control of the present invention. The computer 220 can be actually located in the tester or it can be remote therefrom. Computer 220 over lines 222 control scanning relays 230 in a fashion to be described subsequently and over line 224 also operates relay 232. The computer also operates a relay multiplexer 223 over lines 221. The computer 220 also operates a waveform recorder 240 over lines 226, an AC source 250 over lines 228, and a bank of digital drivers and receivers 260 over lines 262. The computer 220 has an internal memory 220a for storing the program of the present invention as well as a memory portion 220b for storing "expected" signals from the SLIC 110 under test and a memory portion 220c for storing the "actual" signals resulting from the testing of the SLIC.

The waveform recorder 240 is selectively interconnected by a relay 223a over line 242 to a coupling transformer 234, by a relay 223b over line 244 to an attenuator 270 and by a relay 223c over line 246 to the transmit input to the SLIC on line 140. The AC source 250 is also connected to the coupling transformer 234 by a relay 223d over line 242 and is further interconnected by a relay 223e over line 252 to an analog overdrive amplifier 280. The overdrive amplifier 280 produces a minimum output current of 150 mA with a maximum output impedance of 3.0 ohms. The AC source 250 is an alternating current/voltage source having a range of +/- 10 volts at a minimum resolution of 3.0 mV with an accuracy of +/- 0.1% and a frequency range of 0.5 Hz to 20 KHz with a resolution of 0.5 Hz and an accuracy of +/- 0.5%.

The output of the overdrive amplifier 280 is delivered over line 282 through relay 230e. The remaining input to the amplifier is delivered from relay 230d over line 284. The attenuator 270 is interconnected over line 272 to scanning relay 230c and over line 274 to scanning relay 230b. Likewise, relay 232 is connected to lines 272 and 274 as shown in Figure 2b. The digital driver 260c and receivers 260a and 260b are selectively interconnected over lines 266, 262, and 264, respectively. The overdriving digital driver 260c operates in a range of -3.5 to +5.0 DC volts at a minimum resolution of 5.0 mV and a current capability of +/- 500 MA.

The in-circuit tester 200 communicates with the SLIC 110, under test, through the scanner relays 230 which are connected to mechanical probes 210 on a test fixture, not shown. The mechanical and electrical connections are shown in Figure 2 with the probes engaging the selected pins of the SLIC 110, under test, and ready for the pin checks and gross functionality tests of the present invention as set forth in the following. The probes 210 physically make contact with the printed circuit pins, pads or points for the input and output lines of the SLIC 110. In this position, power can be selectively provided to the card.

It is to be expressly understood that to perform an in-circuit test with the telecommunications card 100 powered up, it becomes necessary to electrically isolate the SLIC 110, under test, from all surrounding circuitries. This cannot be physically done (i.e., separation of the components from the card) and must be electrically done, under the teachings of the present invention by means of guarding, digital overdriving and analog overdriving while preventing damage to the other associated components on the card. Once the SLIC 110 is isolated from all surrounding circuitries, the appropriate SLIC inputs are stimulated and then measurements are made at the appropriate SLIC outputs to determine pin checks and gross functionality. This process may be repeated as many times as necessary to completely evaluate the SLIC, under test.

The terms Tip and Ring date back to old patch panel telephone switchboards and refer to the physical tip and ring connection on patch board plugs. The tip 120 and ring 130 functions to form a floating bi-directional port for an interface to a telephone instrument, not shown. Since signals on the tip 120 and ring 130 float, the connection to the in-circuit tester 200 must be made through a transformer coupler. Tip 120 and ring 130 serve as both an input and an output port to the SLIC 110 and the SLIC 110 functions to convert the tip and ring bi-directional port into two uni-directional lines: transmit over line 140 and receive over line 150. The tip and ring lines are also involved in the voice channel path and in the multiple signaling function such as hook status on pin 170 and ring tip on pin 180 and ring detection.

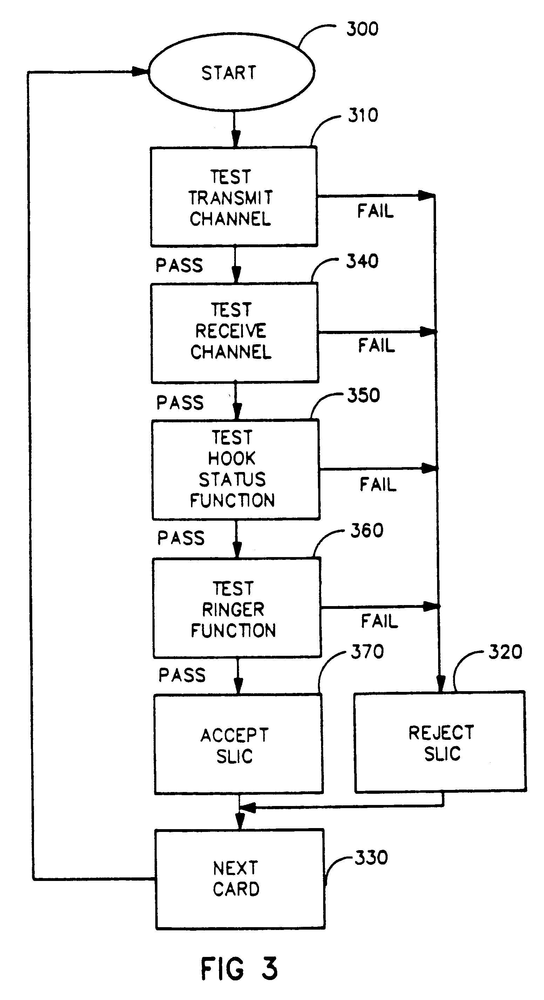

In Figure 3 the overall automatic operation performing the tests of the present invention is set forth. The computer 220 is programmed in memory 220a to start 300 with a card containing a SLIC 110 on the fixture with the probes in place as shown in Figures 2a and 2b. The system is initially reset. and the first test to be performed is the test of the transmit channel 310 and, if it fails, then the SLIC is rejected 320 and the next card 330 is accessed. Upon failure, the next telecommunications card 100 is selected and mounted onto the test fixture. If, on the other hand, the test of the transmit channel 310 passes, the testing of the receive channel 340 commences. The system then successively tests at different time intervals the status of the hook function 350 and the ringer function 360. If the SLIC 110 passes these four tests, (i.e., 310, 340, 350, and 360), the system accepts the SLIC 370, all probes 210 are then removed and the card 100 is released from the fixture. The next card 330 is then mounted and the testing continues.

It is to be expressly understood that the order of conducting these tests could be any suitable order based upon the needs of a particular customer. In addition, it is to be expressly understood that if any one of the tests fail, upon encountering the first failure, the testing procedure could stop without completing the remaining tests and the SLIC 110 under test, be rejected. On the other hand, it is to be expressly understood that in the reject SLIC stage 320, all four tests could be completed and those tests which fail could be separately recorded for use by the operator of the system. In addition, while a new card could be mounted at stage 330, the system could be programmed to conduct other in-circuit tests on other components on the same card before proceeding to the next card.

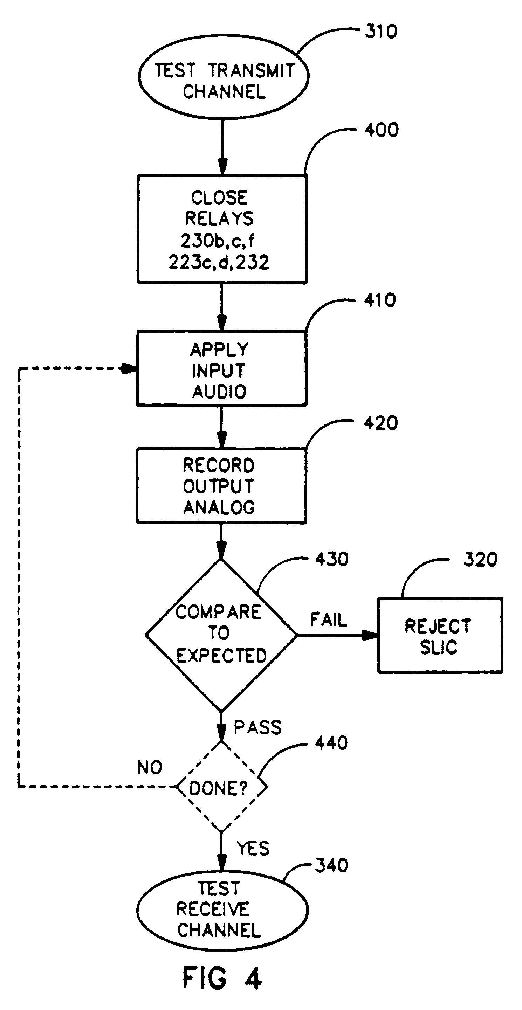

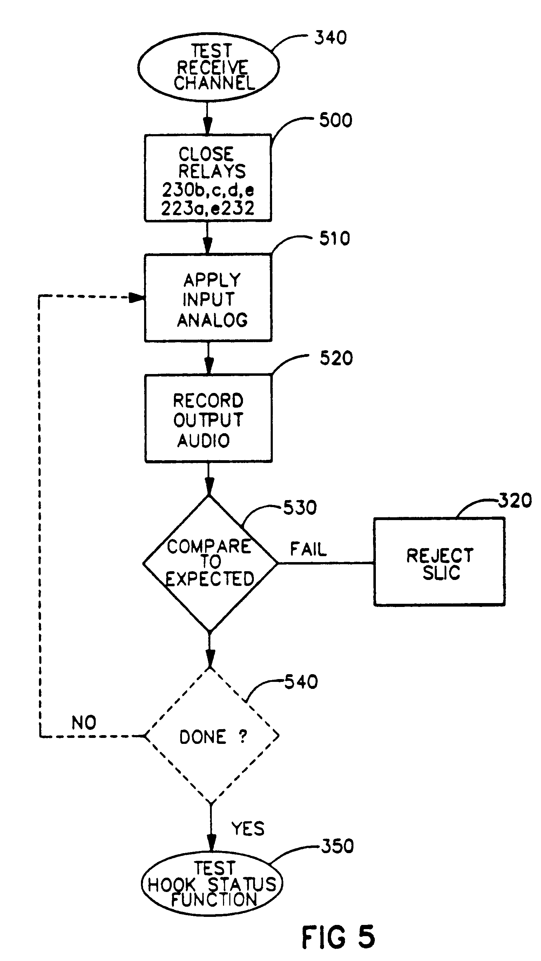

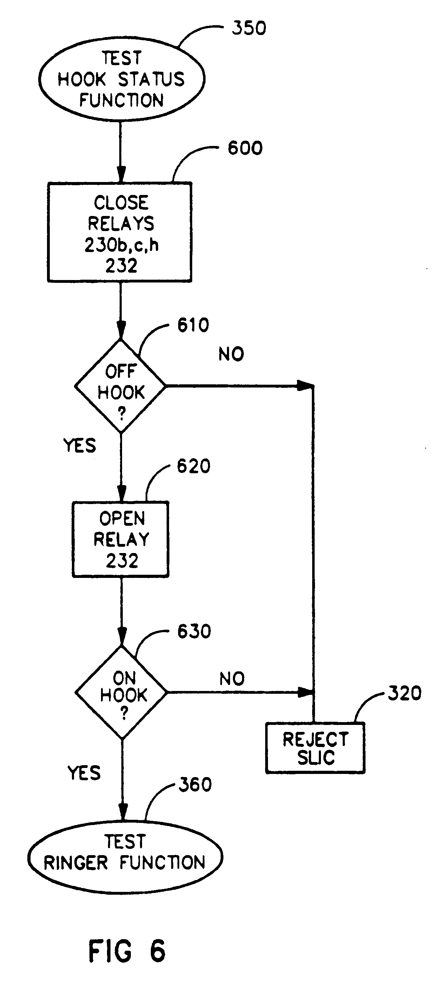

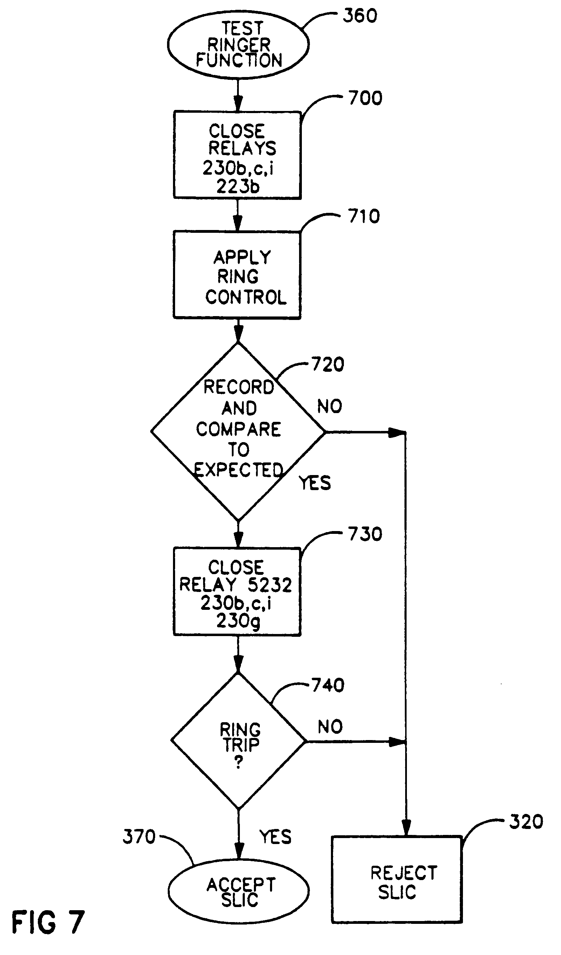

The advantage of the in-circuit tester 200 of the present invention is that it automatically and rapidly proceeds from test to test, checks the pins and verifies gross functionality as will be discussed in the following.
1. Test Transmit Channel 310 - In Figure 4, the automatic procedure for testing the transmit channel 140 during a first time interval of the SLIC 110 under test, is set forth.
   The first stage 400 of this test is to close the appropriate relays. The computer 220 closes the scanner relays 230b, 230c and 230f. This connects the in-circuit tester 200 to probe 210b to the tip pin 120, probe 210c to the ring pin 130, and probe 210f to the transmit pin 140. Relay 232 is also closed to couple the ring and tip pins to the coupling transformer 234. The coupling transformer 234 electrically isolates the tester 200 from the SLIC to guard against damaging DC voltages associated with the floating tip-ring interface and is interconnected over line 242 through a closed relay 223d to the AC source 250. In this set up, the AC source 250 is directly connected across the tip and ring of the SLIC 110 under test. The output signal on the transmit pin 140 of the SLIC 110 is delivered over probe 210f, through relay 230f, and over line 246 through closed relay 223c into the waveform recorder 240. In addition, the ground 209 of the in-circuit tester 200 and the ground 211 of the telecommunications card 100 are connected by the closure of relay 230a. This is true for all of the tests herein and will not be repeated.
   At this point in the operation, the SLIC 110 under test, can be driven by the AC source 250 at the tip and ring pins and the resulting transmit output signals at pin 140 can be recorded by waveform recorder 240. An audio signal 410 is applied to the SLIC 110 and the analog output on the transmit channel 140 is recorded 420 by the waveform recorder 240. The computer 220 then compares 430 the recorded output signal which is stored in memory 220c with an expected signal stored in memory 220b and if the recorded signal favorably compares to the standard signal, the computer opens the relays and proceeds to the test receive channel mode 340 and if the comparison is unfavorable, the computer rejects 320 the SLIC. For example, the AC source 250 could apply a 3 volt, peak-to-peak, 2 KHz sine wave to the Tip and Ring pins 120 and 130. The resulting waveform on the Transmit pin, as recorded in recorder 240 would pass if it is within a +/- 10% range of the expected 3 volt, peak-to-peak, 2KHz signal. If the actual waveform is outside the 10% window, the SLIC fails.
   It is to be expressly understood that more than one audio test 410 as indicated by stage 440 could be conducted. For example, a range of audio tests in the range of 300 Hz to 3 KHz could be conducted on the SLIC 110 or, simply, a single discrete audio test. In addition, it is to be expressly understood that the same test could be reported more than once. It is also understood that suitable time delays are present between stages 400, 410, 420, and 430 to allow the in-circuit tester 200 and the SLIC 110 to settle down and respond to the signals. For example, when the input audio signal 410 is applied to the tip 120 and ring 130, a time delay is required to allow the SLIC 110 to process the audio signal and deliver it to the transmit channel 140.
2. Test Receive Channel 340 - The next automatic in-circuit test of the present invention is the test of the receive channel 340 during a second time interval as set forth in Figure 5. Unlike the test of the transmit channel 140, the test of the receive channel 150 requires electrical isolation of the SLIC 110 from the associated CODEC 120. How this is accomplished will be explained in the following.
   As shown in Figure 5, the computer 220 closes relays 230b, 230c, 230d, and 230e, closes relays 223a and 223e and closes relay 232. The closing of these relays causes the receive pin 150 to be connected to the analog overdrive amplifier 280 which in turn is connected to the AC source 250. In addition, the tip 120 and ring 130 are connected to the coupling transformer 234, the output of which is connected over line 242 to the waveform recorder 240. After the connection has been made, the computer 220 applies an appropriate input analog signal 510 to stimulate the receive pin 150 of the SLIC 110.
   The AC source 250 delivers the analog signal over line 252 to the overdrive amplifier 280. The overdrive amplifier 280 maintains the voltage by providing sufficient current to overdrive any signal on line 150 from the CODEC 120. The overdrive amplifier 280 thus imposes the waveform as determined by the AC source 250 directly onto the receive pin 150. The amplifier 280 receives its negative input on line 284 from receive pin 150. This provides remote sensing which reduces errors in providing the desired waveform to the SLIC 110 under test. The remote sensing and guarding assures the accuracy of the applied and detected voltages and effectively cancels out level shifts.
   After a reasonable delay time frame to allow the SLIC 110 to process the input signal, the waveform recorder 240 records 520 the output on the tip 120 and ring 130 as transmitted through the coupling transformer 234. The computer then compares the recorded signal with an expected signal at stage 530 and if it fails, rejects 320 the SLIC. If it passes the comparison 530, the computer 220 can optionally 540 determine whether or not other input analog signals either in a range or the same signal should be applied 510 to repeat the above described process. When done, the computer 220 opens the relays and accesses the next test, the test of the hook status function 350.
   For example, if the AC source 250 applies a 3 volt, peak-to-peak, 2 KHz sine wave to the receive pin 150 of the SLIC 110, under test, the resulting waveform from the tip and ring pins is recorded through the 1:1 isolation transformer 234. The recorder waveform is compared to the expected signal of 3 volts, peak-to-peak, 2 KHz sine wave +/- 10%. If the results fall outside the 10% window the SLIC fails.
3. Hook Status Function Test 350 - In Figure 6, the procedure the computer 220 follows for conducting the test of the hook status function 350 during a third time interval is set forth. This is a two part test.
   During the first part of the test, the computer 220 over line 222 closes standard relays 230b, 230c, and 230h as well as relay 232. This occurs in stage 600. In this circuit arrangement, the coupling transformer 234 and a 400 ohm resistor 235 are interconnected across the tip 120 and ring 130 input to the SLIC 110. This creates an "offhook" condition. After a suitable delay, necessary for the SLIC 110 to respond, the hook status output on pin 170 is delivered over mechanical probe 210h through closed relay 230h to a digital receiver 260b. If the SLIC circuit 110 is working properly, the digital receiver 260b will detect an "offhook" signal. This occurs in stage 610 and, if it does not, the processor will reject the SLIC in stage 320. The resistor 235 is a 400 ohm resistor which is in series with the transformer and serves to set the DC current level flowing between the tip 120 and the ring 130 input to the SLIC 110, an indication of "off-hook" status.
   If the computer 220 successfully determines an "offhook" status as being proper, the second part commences. Stage 620 is entered and relay 232 is opened thereby disconnecting the coupling transformer 234 and the resistor 235. This emulates an "onhook" status at the tip and ring input. After a suitable delay at stage 630, the processor 220 ascertains whether the appropriate onhook signal was received. If not, the SLIC 110 is rejected and if yes, the computer opens the relays and the process continues with the test ringer function 360.
4. Test Ringer Function 360 - In Figure 7, the process for testing the ring function during a fourth time interval is set forth and also comprises two parts.
   In the first part, the computer 220, at stage 700, closes relays 230b, 230c, and 230i as well as relay 223b. This interconnects the tip and ring pins of the SLIC 110 to the attenuator circuit 270. The output of the attenuator circuit 270 is delivered over line 244 through relay 223b to the waveform recorder 240. At the same time, the output of the digital driver 260c is delivered over line 266 through closed relay 230i through mechanical probe 210i and to ring control pin 160.
   The computer then, at stage 710, applies current by activating driver 260c to drive the ring control pin 160. The stimulation of the ring control input 160 by the driver 260c simulates a ring command to the SLIC. To accomplish this, the digital input on line 160 must be isolated from the associated component 160a and is stimulated by means of a high current digital overdriving driver 260c. The application of this overdriving signal permits the SLIC to operate independently of the other digital circuitry on the board 100 during the test. If the digital overdrive testing is conducted for too long of a time, damage to the upstream component 160a could occur. The present invention completes this basic task rapidly and the current levels are designed to be well within the overdrive values of the upstream integrated circuit components.
   Upon assertion of the ring control on pin 160, the SLIC 110 after a suitable delay, produces ring voltage at the tip and ring. This is delivered into the attenuator 270. The attenuator is necessary to guard the tester 200 as the ring voltage is high, typically 90-150 volts AC, and outside of the range of the waveform recorder 240. The attenuator is essentially a network of resistors dropping the voltage down by a factor of ten. This attenuator voltage is then delivered over line 244 into the waveform recorder 240 and the computer 220 then compares it to an expected value in stage 720. If improper, the SLIC 110 is rejected and if proper, the second part of operation is entered.
   In stage 730, the second part of operation is entered, and that is the detection of a "ring trip". Ring trip occurs when a ringing phone is taken off hook and this is simulated by the processor closing relays 232 and 230g. The closing of relays 232 applies the coupling transformer 234 with the resistor 235 across the tip and ring line thereby simulating an offhook condition. After a suitable time delay the computer in stage 740 senses the status of the ring trip pin 180 over mechanical probe 210g through relay 230g and into a digital receiver 260a. If no ring trip is detected, the SLIC is rejected and if ring trip is detected, the computer 220 accepts the SLIC and returns to the next card 330 stage in Figure 3.

This completes the automated SLIC testing procedure of the present invention. In the typical testing of a SLIC, the present invention proceeds automatically and provides several orders of magnitude of speed improvement over conventional SLIC testing approaches. After completion, the computer opens all relays. The card can now be removed and the next SLIC inserted for testing or the system can proceed with tests of other components on the same card as set forth in the above related applications.

It is to be expressly understood that while a preferred order of testing is set forth in Figures 3-7, these procedures may be changed in the order of processing, truncated into fewer steps in order to increase throughput or further partitioned into more steps in order to cover a specific requirement.

The present invention provides a unique means and method of programmatically generating in-circuit pin checks and gross functionality tests of subscriber line interface circuits such as those found on a telecommunications card. The present invention, therefore, provides a method of quality control in the manufacture of printed circuit boards containing these hybrid devices.

## Claims

1. An automated apparatus (200) for in-circuit testing of a subscriber line interface circuit (110) mounted on a telecommunications card (100), said subscriber line interface circuit being interconnected with other associated components (115) on said card, said subscriber line interface circuit being capable of generating transmit (140), telecommunication (120, 130), hook status (170), ringing (160) and ring trip (180) signals, said automated apparatus being characterised in that it comprises:
means (234, 260, 280) connected to said telecommunications card for electrically isolating said subscriber line interface circuit from said other associated components on said card,
means (270, 250, 221, 232, 220) connected to said electrical isolation means for selectively causing said subscriber line interface circuit to generate said transmit, telecommunication, hook status, ringing and ring trip signals by applying test signals to said subscriber line interface circuit which overdrive any analog or digital signals present on said telecommunications card,
means (240, 220) in said selective causing means for comparing each selectively generated transmit, telecommunication, hook status, ringing and ring trip signals to expected values, and
means (220) in said selective causing means for issuing a fail signal when any one of said selectively generated signals does not correspond to said expected value.

2. An automated apparatus (200) for in-circuit testing of a subscriber line interface circuit (110) mounted on a telecommunications card (100), said subscriber line interface circuit being interconnected with other associated components (115) on said card, said subscriber line interface circuit having tip and ring pins (120, 130), transmit and receive pins (140, 150) and ring control (160), hook status (170) and ring trip (180) pins, said automated apparatus being characterised in that it comprises:
first means (230b, 230c, 230f, 232, 234, 223d, 250, 223c, 240) automatically connecting to said tip, ring, and transmit pins for applying, during a first time interval, at least one analog AC voltage signal across said tip and ring pins, said first applying means further recording transmit signals on said transmit pin,
second means (230b, 230c, 230d, 230e, 223a, 223e, 232, 280, 250, 234, 240) automatically connecting to said tip, ring and receive pins for applying, during a second time interval, at least one analog AC voltage signal to said receive pin, said second applying means further recording telecommunication signals on said tip and ring pins,
third means (230b, 230c, 230h, 232, 234, 235, 260b) automatically connecting to said hook status, tip and ring pins for applying, during a third time interval, off-hook and on-hook signals to said tip and ring pins, said third applying means receiving hook status signals on said hook status pin,
fourth means (230b, 230c, 230i, 223b, 270, 223b, 240, 260c) automatically connecting to said ring control, ring trip, and tip and ring pins for applying, during a fourth time interval, a ring command to said ring control pin, said fourth applying means recording the ringing signal across said tip and ring pins, said fourth applying means then applying an off-hook signal onto said tip and ring pins and receiving the ring trip signal on the ring trip pin, and
means (220) receptive of said transmit, telecommunication, hook status, ringing and ring trip signals for comparing each of said received signals to expected signals, said comparing means issuing fail signals when any one of said received signals fails outside a predetermined range of said expected signals.

3. The automated apparatus of claim 2, wherein the second means applies the analog AC voltage to said receive pin by electrically overdriving any analog signal on said receive pin, and wherein the fourth means applies the ring common to said ring control pin by electrically overdriving any signal digital signal on said ring control pin.

4. The automated apparatus of Claim 3 further comprising means (280) in said second applying means and receptive of said at least one analog AC voltage signal for amplifying said analog AC voltage signal in order to electrically overdrive said analog AC voltage signal.

5. The automated apparatus of Claim 4 wherein said amplifying means (280) produced a minimum output current of 150 mA within a maximum output impedance of 3.0 ohms.

6. The automated apparatus of any of Claims 3 to 5, further comprising means (260c) in said fourth applying means receptive of said ring control pin.

7. The automated apparatus of claim 6 wherein said digital overdriving means (260c) operates in a range of - 3.5 to 5.0 volts at a minimum resolution of 5.0 mV and a current capability of +/- 500 MA.

8. The automated apparatus of any of claims 2 to 7 further comprising mean s (250) in said first and second applying means for generating said analog AC voltage signal, said generating means being capable of generating an AC voltage in the range of +/- 10.0 volts at a minimum resolution of 3.0 mV with an accuracy of +/- 0.1 % and in a frequency range of 0.5Hz to KHz with a resolution of 0.5 Hz and an accuracy of +/- 0.5 %.

9. A method for in-circuit testing of a subscriber line interface circuit (110) mounted on a telecommunications card (100), said subscriber line interface circuit being interconnected with other associated components (115) on said card, said subscriber line interface circuit being capable of generating transmit (140), telecommunication (120,130), hook status (170), ringing (160) and ring trip (180) signals, said method being characterised in that it comprises the steps of:
electrically isolating (234, 260, 280) the powered up subscriber line interface circuit from said other associated components on said card,
selectively causing (310, 340, 350 360) the subscriber line interface circuit to generate the transmit, telecommunications, hood status, ringing and ring trip signals by applying testing signals to the subscriber line interface circuit which overdrive any any analog or digital signals present on said telecommunications card,
comparing (220) each selectively generated transmit, telecommunication, hook status, ringing and ring trip signals to expected values, and
issuing a fail signal (320) when anyone of the selectively generated signals does not correspond to said expected value.

10. A method for in-circuit testing of a subscriber line interface circuit (110) mounted on a telecommunications card (100), said subscriber line interface circuit being interconnected with other associated components (115) on said card, said subscriber line interface circuit having tip and ring pins (120,130), transmit and receive pins (140,150), and ring control (160), hook status (170) and ring trip (180) pins, said method being characterised in that it comprises the steps of:
during a first time interval (310):
(a) applying at least one analog AC voltage signal across said tip and ring pins, and
(b) recording the resulting transmit signals on said transmit pin,
during a second time interval (340):
(a) applying at least one analog AC voltage signal to said receive pin, and
(b) recording the resulting telecommunications signals on said tip and ring pins,
during a third time interval (350):
(a) applying off-hook and on-hook signals to said tip and ring pins, and
(b) receiving the resulting hook status signals on said hook status pin,
during a fourth time interval:
(a) applying a ring command to said ring control pin,
(b) recording the resulting ringing signal across said tip and ring pins,
(c) applying an off-hook signals onto said tip and ring pins, and
(d) receiving the resulting ring trip signals on the ring trip pin,
comparing (220) each of the transmit, telecommunication, hook status, ringing and ring trip signals to expected signals, and issuing fail signals (320) when any one of the received signals falls outside a predetermined range of said expected signals.

11. The method of claim 10 wherein during the second time interval, step (a) comprises applying at least one analog AC voltage signal to electrically overdrive any analog signal on said receive pin, and during the fourth time interval step (a) comprises applying a ring command to electrically overdrive any digital signal on said ring control pin.

## Patentansprüche

1. Automatisiertes Gerät (200) zur schaltungsinternen Prüfung einer Teilnehmerschaltung (110), die auf einer Telekommunikationskarte (100) aufgebaut ist, wobei die Teilnehmerschaltung mit weiteren zugeordneten Komponenten (115) auf der Karte verschaltet ist, wobei die Teilnehmerschaltung in der Lage ist, Übertragungs- (140), Telekommunikations- (120, 130), Einhängestatus- (170), Klingel- (160) und Klingelausschalte- (180) Signale zu erzeugen, wobei das automattsierte Gerät dadurch gekennzeichnet ist, daß es aufweist:
Mittel (234, 260, 280), die mit der Telekommunikationskarte zum elektrischen Isolieren der Teilnehmerschaltung von den anderen zugeordneten Komponenten auf der Karte verbunden sind;
Mittel (270, 250, 221, 232, 220), die mit den elektrischen Isoliermitteln verbunden sind, um wahlweise zu bewirken, daß die Teilnehmerschaltung die Übertragungs-, Telekommunikations-, Einhängestatus-, Klingel- und Klingelausschaltesignale durch Aufgeben von Testsignalen auf die Teilnehmerschaltung erzeugt, die irgendein analoges oder digitales Signal übersteuern, das auf der Telekommunikationskarte vorliegt,
Mittel (240, 220) in den Mitteln zum selektiven Bewirken zum Vergleichen jedes der wahlweise erzeugten Übertragungs-, Telekommunikations-, Einhängestatus-, Klingel- und Klingelausschaltesignale mit erwarteten Werten und
Mittel (220) in den Mitteln zum wahlweisen Bewirken zum Ausgeben eines Ausfallsignals, wenn irgendeines der wahlweise erzeugten Signale nicht dem erwarteten Wert entspricht.

2. Automatisiertes Gerät (200) zur schaltungsinternen Prüfung einer Teilnehmerschaltung (110), die auf einer Telekommunikationskarte (100) aufgebaut ist, wobei die Teilnehmerschaltung mit anderen zugeordneten Komponenten (115) auf der Karte verschaltet ist, wobei die Teilnehmerschaltung Kipp- und Klingelstifte (120, 130), Übertragungs- und Empfangsstifte (140, 150) und Klingelsteuer(160), Einhängestatus- (170) und Klingelausschalte- (180) Stifte hat, wobei das automatisierte Gerät dadurch gekennzeichnet ist, daß es aufweist:
erste Mittel (230d, 230c, 230f, 232, 234, 223d, 250, 223c, 240), die automatisch an die Kipp-, Klingel- und Übertragungsstifte geschaltet sind, um während eines ersten Zeitintervalles wenigstens ein analoges Wechselspannungssignal über die Kipp- und Klingelstifte aufzugeben, wobei die ersten Aufgabemittel weiterhin Übertragungssignale auf dem Übertragungsstift aufzeichnen,
zweite Mittel (230b, 230c, 230d, 230e, 223a, 223e, 232, 280, 250, 234, 240), die automatisch an die Kipp-, Klingel- und Empfangsstifte geschaltet sind, um während eines zweiten Zeitintervalles wenigstens ein analoges Wechselspannungssignal auf den Empfangsstift aufzugeben, wobei die zweiten Aufgabemittel weiterhin Telekommunikationssignale auf den Kipp- und Klingelstiften aufzeichnen,
dritte Mittel (230b, 230c, 230h, 232, 234, 235, 260b), die automatisch an die Einhängestatus-, Kipp- und Klingelstifte geschaltet sind, um während eines dritten Zeitintervalles Abhebe- und Auflegesignale auf die Kipp- und Klingelstifte aufzugeben, wobei die dritten Aufgabemittel Einhängestatussignale auf dem Einhängestatusstift empfangen,
vierte Mittel (230b, 230c, 230e, 223b, 270, 223b, 240, 260c), die automatisch an die Klingelsteuer-, Klingelausschalte- und Kipp- und Klingelstifte geschaltet sind, um während eines vierten Zeitintervalls einen Klingelbefehl auf den Klingelsteuerstift aufzugeben, wobei die vierten Aufgabemittel das Klingelsignal über den Kipp- und Klingelstiften aufzeichnen, wobei die vierten Aufgabemittel dann ein Abhebesignal auf die Kipp- und Klingelstifte aufgeben und das Klingelausschaltesignal auf dem Klingelausschaltestift empfangen und
Mittel (220), die das Übertragungs-, Telekommunikations-, Einhängestatus-, Klingel- und Klingelausschaltesignal empfangen, zum Vergleichen jedes der empfangenen Signale mit erwarteten Signalen, wobei die Vergleichseinrichtung Ausfallsignale ausgibt, wenn irgendeines der empfangenen Signale außerhalb eines vorbestimmten Bereiches der erwarteten Signale fällt.

3. Automatisiertes Gerät nach Anspruch 2, bei dem das zweite Mittel die analoge Wechselspannung auf den Empfangsstift durch elektrisches Übersteuern jedes Analogsignales auf dem Empfangsstift aufgibt und wobei das vierte Mittel den Klingelbefehl auf den Klingelsteuerstift aufgibt, indem elektrisch jedes digitale Signal auf dem Klingelsteuerstift übersteuert wird.

4. Automatisiertes Gerät nach Anspruch 3, das weiterhin Mittel (280) in den zweiten Aufgabemitteln aufweist, die wenigstens ein analoges Wechselspannungssignal empfangen, um das analoge Wechselspannungssignal zu verstärken, um jedes analoge Wechselspannungssignal elektrisch zu übersteuern.

5. Automatisiertes Gerät nach Anspruch 4, bei dem die Verstärkungsmittel (280) einen minimalen Ausgabestrom von 150 mA mit einer maximalen Ausgabeimpedanz von 3,0 Ohm erzeugen.

6. Automatisiertes Gerät nach einem der Ansprüche 3 bis 5, das weiterhin Mittel (260c) in den vierten Aufgabemitteln aufweist, die von dem Klingelsteuerstift aufnehmen.

7. Automatisiertes Gerät nach Anspruch 6, bei dem das digitale Übersteuermittel (260c) in einem Bereich von -3,5 bis 5,0 Volt bei einer minimalen Auflösung von 5,0 mV und einem Stromleistungsvermögen von +/- 500 mA arbeitet.

8. Automatisiertes Gerät nach einem der Ansprüche 2 bis 7, das weiterhin Mittel (250) in den ersten und zweiten Aufgabemitteln zum Erzeugen des analogen Wechselspannungssignales aufweist, wobei die Erzeugungsmittel in der Lage sind, eine Wechselspannung in dem Bereich von +/- 10,0 Volt mit einer minimalen Auflösung von 3,0 mV mit einer Genauigkeit von +/- 0,1 % und in einem Frequenzbereich von 0,5 Hz bis kHz mit einer Auflösung von 0,5 Hz und einer Genauigkeit von +/- 0,5 % zu erzeugen.

9. Verfahren zum schaltungsinternen Prüfen einer Teilnehmerschaltung (110), die auf einer Telekommunikationskarte (100) aufgebaut ist, wobei die Teilnehmerschaltung mit weiteren zugeordneten Komponenten (115) auf der Karte verschaltet ist, wobei die Teilnehmerschaltung in der Lage ist, Übertragungs- (140), Telekommunikations- (120, 130), Einhängestatus- (170), Klingel- (160) und Klingelausschalte-(180) Signale zu erzeugen, wobei das Verfahren dadurch gekennzeichnet ist, daß es die Schritte aufweist:
elektrisches Isolieren (234, 260, 280) der angeregten Teilnehmerschaltung von den anderen zugeordneten Komponenten auf der Karte,
wahlweises Veranlassen (310, 340, 350, 360) der Teilnehmerschaltung, die Übertragungs-, Telekommunikations-, Einhängestatus-, Klingel- und Klingelausschaltesignale zu erzeugen, indem Prüfsignale auf die Teilnehmerschaltung aufgegeben werden, die irgendwelche analogen oder digitalen Signale übersteuern, die auf der Telekommunikationskarte vorliegen,
Vergleichen (220) jedes selektiv erzeugten Übertragungs-, Telekommunikations-, Einhängestatus-, Klingel- und Klingelausschaltesignales mit erwarteten Werten, und
Ausgeben eines Ausfallsignals (320), wenn irgendeines der wahlweise erzeugten Signale dem erwarteten Wert nicht entspricht.

10. Verfahren zum schaltungsinternen Prüfen einer Teilnehmerschaltung (110), die auf einer Telekommunikationskarte (100) aufgebaut ist, wobei die Teilnehmerschaltung mit weiteren zugeordneten Komponenten (115) auf der Karte verschaltet ist, wobei die Teilnehmerschaltung Kipp- und Klingelstifte (120, 130), Übertragungs- und Empfangsstifte (140, 150) und Klingelsteuer- (160), Einhängestatus- (170) und Klingelausschalte- (180) Stifte hat, wobei das Verfahren dadurch gekennzeichnet ist, daß es die Schritte aufweist:
während eines ersten Zeitintervalles (310):
(a) Aufgeben wenigstens eines analogen Wechselspannungssignals über die Kipp- und Klingelstifte, und
(b) Aufzeichnen der sich ergebenden Übertragungssignale auf dem Übertragungsstift;
während eines zweiten Zeitintervalles (340):
(a) Aufgeben wenigstens eines analogen Wechselspannungsignals auf den Empfangsstift, und
(b) Aufzeichnen der sich ergebenden Telekommunikationssignale auf den Kipp- und Klingelstiften;
während eines dritten Zeitintervalles (350):
(a) Aufgeben von Abhebe- und Auflegesignalen auf die Kipp- und Klingelstifte, und
(b) Empfangen der sich ergebenden Einhängestatussignale auf dem Einhängestatusstift,
während eines vierten Zeitintervalles:
(a) Aufgeben eines Klingelbefehls auf den Klingelsteuerstift,
(b) Aufzeichnen des sich ergebenden Klingelsignals über die Kipp- und Klingelstifte,
(c) Aufgeben eines Auflegesignals auf die Kipp- und Klingelstifte und
(d) Empfangen des sich ergebenden Klingelausschaltesignals auf dem Klingelausschaltestift,
Vergleichen (220) jedes der Übertragungs-, Telekommunikations- Einhängestatus-, Klingel-, und Klingelausschaltesignale mit erwarteten Signalen und Ausgeben von Ausfallsignalen (320), wenn irgendeines der empfangenen Signale außerhalb eines vorbestimmten Bereiches der erwarteten Signale fällt.

11. Verfahren nach Anspruch 10, bei dem während des zweiten Zeitintervalles der Schritt (a) das Aufgeben wenigstens eines analogen Wechselspannungssignals zum elektrischen Übersteuern irgendeines Analogsignales auf dem Empfangsstift aufweist und während des vierten Zeitintervalls der Schritt (a) das Aufgeben eines Klingelbefehls zum elektrischen Übersteuern irgendeines digitalen Signals auf dem Klingelsteuerstift aufweist.

## Revendications

1. Appareil automatique (200) pour test encircuit d'un circuit d'interface de ligne d'abonné (110) monté sur une carte de télécommunications (100), ledit circuit d'interface de ligne d'abonné étant interconnecté avec d'autres composants associés (115) sur ladite carte, ledit circuit d'interface de ligne d'abonné étant capable de générer des signaux d'émission (140), de télécommunications (120, 130), d'état de la communication (170), de sonnerie (160) et d'arrêt de sonnerie (180), ledit appareil automatique étant caractérisé en ce qu'il comporte:
un moyen (234, 260, 280) connecté à ladite carte de télécommunications pour isoler électriquement ledit circuit d'interface de ligne d'abonné desdits autres composants associés situés sur ladite carte,
un moyen (270, 250, 221, 232, 220) connecté audit moyen d'isolement électrique, pour faire générer par ledit circuit d'interface de ligne d'abonné lesdits signaux d'émission, de télécommunications, d'état de la communication, de sonnerie et d'arrêt de sonnerie, en appliquant des signaux d'essai audit circuit d'interface de ligne d'abonné, qui surchargent tous les signaux analogiques ou numériques qui sont présents sur ladite carte de télécommunications,
un moyen (240, 220) situé dans ledit moyen de forçage sélectif, pour comparer chaque signal d'émission, de télécommunications, d'état de la communication, de sonnerie et d'arrêt de sonnerie, générés de façon sélective, à des valeurs attendues, et
un moyen (220) situé dans ledit moyen de forçage sélectif, pour délivrer un signal de défaut lorsque l'un quelconque des signaux générés de façon sélective ne correspond pas à ladite valeur attendue.

2. Appareil automatique (200) pour essai encircuit d'un circuit d'interface de ligne d'abonné (110) monté sur une carte de télécommunications (100), ledit circuit d'interface de ligne d'abonné étant interconnecté avec d'autres composants associés (115) sur ladite carte, ledit circuit d'interface de ligne d'abonné ayant des broches d'extrémité et d'appel (120, 130), des broches d'émission et de réception (140, 150) et des broches de commande de sonnerie (160), d'état de la communication (170) et d'arrêt de sonnerie (180), ledit appareil automatique étant caractérisé en ce qu'il comporte:
un premier moyen (230b, 230c, 230f, 232, 234, 223d, 250, 223c, 240) se connectant automatiquement auxdites broches d'extrémité et d'appel, et d'émission pour appliquer, pendant un premier intervalle de temps, au moins un signal de tension alternative analogique aux bornes desdites broches d'extrémité et d'appel, ledit premier moyen d'application enregistrant en outre les signaux émis sur ladite broche d'émission,
un second moyen (230b, 230c, 230d, 230e, 223a, 223e, 232, 280, 250, 234, 240) se connectant automatiquement auxdites broches d'extrémité et d'appel, et d'émission pour appliquer, pendant un second intervalle de temps, au moins un signal de tension alternative analogique à ladite broche de réception, ledit second moyen d'application enregistrant en outre les signaux de télécommunications présents sur lesdites broches d'extrémité et d'appel,
un troisième moyen (230b, 230c, 230h, 232, 234, 235, 260b) se connectant automatiquement auxdites broches d'état de la communication, d'extrémité et d'appel, pour appliquer, pendant un troisième intervalle de temps, des signaux de décrochage et de raccrochage auxdites broches d'extrémité et d'appel, ledit troisième moyen d'application recevant des signaux d'état de la communication sur ladite broche d'état de la communication,
un quatrième moyen (230b, 230c, 230i, 270, 223b, 240, 260c) se connectant automatiquement auxdites broches de commande de sonnerie, d'arrêt de sonnerie, et d'extrémité et d'appel, pour appliquer, pendant un quatrième intervalle de temps, une commande de sonnerie à ladite broche de commande de sonnerie, ledit quatrième moyen d'application enregistrant le signal de sonnerie présent aux bornes desdites broches d'extrémité et d'appel, ledit quatrième moyen d'application appliquant ensuite un signal de décrochage auxdites broches d'extrémité et d'appel et recevant le signal d'arrêt de sonnerie sur ladite broche d'arrêt de sonnerie, et
un moyen (220) sensible auxdits signaux d'émission, de télécommunications, d'état de la communication, de sonnerie et d'arrêt de sonnerie, pour comparer chacun desdits signaux reçus à des signaux attendus, ledit moyen de comparaison délivrant des signaux de défaut lorsque l'un quelconque des signaux reçus tombe à l'extérieur d'une gamme prédéterminée desdits signaux attendus.

3. Appareil automatique selon la revendication 2, dans lequel le second moyen applique la tension alternative analogique à ladite broche de réception en surchargeant électriquement tous les signaux analogiques présents sur ladite broche de réception, et dans lequel le quatrième moyen applique la sonnerie commune à ladite broche de commande de sonnerie en surchargeant électriquement tous les signaux numériques présents sur ladite broche de commande de sonnerie.

4. Appareil automatique selon la revendication 3, comportant en outre un moyen (280) situé dans ledit second moyen d'application et sensible audit signal de tension analogique alternatif, pour amplifier ledit signal de tension alternatif analogique afin de surcharger électriquement ledit signal de tension alternatif analogique.

5. Appareil automatique selon la revendication 4, dans lequel ledit moyen amplificateur (280) produit un courant de sortie minimum de 150 mA à l'intérieur d'une impédance de sortie minimum de 3,0 ohms.

6. Appareil automatique selon l'une quelconque des revendications 3 à 5, comportant en outre un moyen (260c) situé dans ledit quatrième moyen d'application, sensible à ladite broche de commande de sonnerie.

7. Appareil automatique selon la revendication 6, dans lequel ledit moyen de surcharge numérique (260c) fonctionne dans une plage de -3,5 à 5,0 volts avec une résolution minimum de 5,0 mV et une capacité en courant de +/- 500 mA.

8. Appareil automatique selon l'une quelconque des revendications 2 à 7, comportant en outre un moyen (250) situé dans lesdits premier et second moyens d'application, pour générer ledit signal de tension alternative analogique, ledit moyen de génération étant capable de générer une tension alternative dans la plage de +/- 10 volts avec une résolution minimum de 3,0 mV et une précision de +/-0,1% et dans une plage de fréquences de 0,5 Hz à kHz avec une résolution de 0,5 Hz et une précision de +/-0,5%.

9. Procédé pour essai en-circuit d'un circuit d'interface de ligne d'abonné (110) monté sur une carte de télécommunications (100), ledit circuit d'interface de ligne d'abonné étant interconnecté avec d'autres composants associés (115) sur ladite carte, ledit circuit d'interface de ligne d'abonné étant capable de générer des signaux d'émission (140), de télécommunications (120, 130), d'état de la communication (170), de sonnerie (160) et d'arrêt de sonnerie (180), ledit procédé étant caractérisé en ce qu'il comporte les étapes de:
isolement électrique (234, 260, 280) dudit circuit d'interface de ligne d'abonné alimenté, desdits autres composants associés situés sur ladite carte,
obligation sélective (310, 340, 350, 360) de faire générer par ledit circuit d'interface de ligne d'abonné les signaux d'émission, de télécommunications, d'état de la communication, de sonnerie et d'arrêt de sonnerie, en appliquant des signaux d'essai audit circuit d'interface de ligne d'abonné, qui surchargent tous les signaux analogiques ou numériques qui sont présents sur ladite carte de télécommunications,
comparaison (220) de chaque signal d'émission, de télécommunications, d'état de la communication, de sonnerie et d'arrêt de sonnerie, générés de façon sélective, à des valeurs attendues, et
fourniture d'un signal de défaut (320) lorsque l'un quelconque des signaux générés de façon sélective ne correspond pas à ladite valeur attendue.

10. Procédé pour essai en-circuit d'un circuit d'interface de ligne d'abonné (110) monté sur une carte de télécommunications (100), ledit circuit d'interface de ligne d'abonné étant interconnecté avec d'autres composants associés (115) sur ladite carte, ledit circuit d'interface de ligne d'abonné ayant des broches d'extrémité et d'appel (120, 130), des broches d'émission et de réception (140, 150) et de commande de sonnerie (160), d'état de la communication (170) et d'arrêt de sonnerie (180), ledit procédé étant caractérisé en ce qu'il comporte les étapes de:
pendant un premier intervalle de temps (310):
(a) application d'au moins un signal de tension alternative analogique aux bornes desdites broches d'extrémité et d'appel, et
(b) enregistrement des signaux émis résultants sur ladite broche d'émission,
pendant un second intervalle de temps (340):
(a) application d'au moins un signal de tension alternative analogique à ladite broche de réception, et
(b) enregistrement des signaux de télécommunications résultants sur lesdites broches d'extrémité et d'appel,
pendant un troisième intervalle de temps (350):
(a) application de signaux de décrochage et de raccrochage auxdites broches d'extrémité et d'appel, et
(b) réception des signaux d'état de la communication résultants sur ladite broche d'état de la communication,
pendant un quatrième intervalle de temps:
(a) application d'une commande de sonnerie à ladite broche de commande de sonnerie,
(b) enregistrement du signal de sonnerie résultant présent aux bornes desdites broches d'extrémité et d'appel,
(c) application d'un signal de décrochage auxdites broches d'extrémité et d'appel, et
(d) réception du signal d'arrêt de sonnerie résultant sur ladite broche d'arrêt de sonnerie,
comparaison (220) de chacun des signaux d'émission, de télécommunications, d'état de la communication, de sonnerie et d'arrêt de sonnerie aux signaux attendus, et fourniture des signaux de défaut (320) lorsque l'un quelconque des signaux reçus tombe à l'extérieur d'une gamme prédéterminée desdits signaux attendus.

11. Procédé selon la revendication 10, dans lequel, pendant le second intervalle de temps, l'étape (a) comporte l'application d'au moins un signal de tension alternative analogique pour surcharger électriquement tous les signaux analogiques présents sur ladite broche de réception, et pendant l'étape (a) du quatrième intervalle de temps, comporte l'application d'une commande de sonnerie pour surcharger électriquement tous les signaux numériques présents sur ladite broche de commande de sonnerie.
